# EUROPÄISCHE PATENTSCHRIFT

(11) **EP 3 605 046 B1**
(45) Veröffentlichungstag und Bekanntmachung des Hinweises auf die Patenterteilung: **01.09.2021**
(21) Anmeldenummer: 19186832.2
(22) Anmeldetag: 17.07.2019
(51) Int. Cl.: G01K 11/12, G01K 13/08

(54) **VERFAHREN ZUR BESTIMMUNG EINER TEMPERATUR EINES UMLAUFENDEN TEILS UND WÄSCHETROCKNER**
METHOD FOR DETERMINING A TEMPERATURE OF A ROTATING PART AND LAUNDRY DRYER
PROCÉDÉ DE DÉTERMINATION D'UNE TEMPÉRATURE D'UNE PIÈCE TOURNANTE ET SÈCHE-LINGE

(30) Priorität: 02.08.2018 DE 102018212940
(43) Veröffentlichungstag der Anmeldung: 05.02.2020
(73) Patentinhaber: E.G.O. Elektro-Gerätebau GmbH, 75038 Oberderdingen (DE)
(72) Erfinder: Alvarez Raventos, Jordi, 75038 Oberderdingen (DE); Bayer, Ewald, 72358 Dormettingen (DE); Knappe, Gerd, 75015 Bretten (DE); Kümmerle, Hannes, 75038 Oberderdingen (DE); Schmidt, Kay, 75038 Oberderdingen-Flehingen (DE); Thomas, Erika, 72336 Balingen (DE); Weiß, Steffen, 75059 Zaisenhausen (DE); Zabel, Oliver, 76227 Karlsruhe (DE)
(74) Vertreter: Patentanwälte Ruff, Wilhelm, Beier, Dauster & Partner mbB

(56) Entgegenhaltungen:
- DE-A1- 19 537 999
- DE-A1-102011 108 382

## Beschreibung

### Verfahren zur Anwendungsgebiet und Stand der Technik

Die Erfindung betrifft ein Verfahren zur Bestimmung einer Temperatur einer umlaufenden bzw. rotierenden Trommel eines Wäschetrockners. Des Weiteren betrifft die Erfindung einen Wäschetrockner, der dazu ausgebildet ist, dieses Verfahren durchzuführen.

In Wäschetrocknern erfolgt das Trocknen der Wäsche üblicherweise durch Einblasen beheizter Luft. Eine zusätzliche Zuführung von Wärme an die zu trocknende Wäsche könnte über eine Beheizung der Trommel des Wäschetrockners erfolgen. Dabei muss dann natürlich darauf geachtet werden, dass die Temperatur der Trommel nicht zu hoch wird bzw. geregelt werden kann.

Aus der DE 10 2011 108 382 A1 ist es bekannt, an einem Rotor eines Elektromotors Elemente vorzusehen, deren Absorptionsgrad für einfallende Photonen sich temperaturabhängig ändert. Eine nicht-optische Erfassungseinrichtung ist zugeordnet, die ein vom momentanen Absorptionsgrad der Elemente abhängiges Messsignal ermittelt, wobei dieses Messsignal dann ein Maß für die Temperatur des Elements und somit auch für die Temperatur des Rotors darstellt. Damit soll eine zu hohe Temperatur am Rotor des Elektromotors, insbesondere hinsichtlich einer auch nur kurzzeitigen Überschreitung einer Curie-Temperatur von für den Rotor verwendetem Magnetmaterial, vermieden werden.

Aus der DE 195 37 999 A1 ist ein Verfahren bekannt, um thermisch beanspruchte Bauteile, wie beispielsweise eine Gasturbine, zu analysieren durch Auftragen von temperaturempfindlichen bzw. thermochromen Farben. Als Bildaufnahmevorrichtung wird eine digitale Farb-Zeilenkamera eingesetzt, um während der Drehung der Gasturbine genau bestimmte umlaufende Bereiche erfassen zu können. Somit kann deren Temperatur genau erfasst werden.

### Aufgabe und Lösung

Der Erfindung liegt die Aufgabe zugrunde, ein eingangs genanntes Verfahren sowie einen eingangs genannten Wäschetrockner zu schaffen, mit denen Probleme des Standes der Technik gelöst werden können und es insbesondere möglich ist, eine Temperatur einer umlaufenden Trommel eines Wäschetrockners kontaktlos und zuverlässig sowie einfach zu bestimmen.

Gelöst wird diese Aufgabe durch ein Verfahren mit den Merkmalen des Anspruchs 1 sowie durch einen Wäschetrockner mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für den Wäschetrockner beschrieben. Sie sollen jedoch unabhängig davon sowohl für das Verfahren als auch für den Wäschetrockner selbständig und unabhängig voneinander gelten können. Der Wortlaut der Ansprüche wird durch ausdrückliche Bezugnahme zum Inhalt der Beschreibung gemacht.

Es ist vorgesehen, die Temperatur einer vorgenannten umlaufenden bzw. rotierenden Trommel eines Wäschetrockners zu bestimmen. Es könnte aber auch eine Trommel eines anderen Teils sein, beispielsweise auch eine Trommel einer Waschmaschine oder eines kombinierten Geräts. Somit ist insbesondere eine Bestimmung einer Temperatur einer umlaufenden Trommel an einem Elektrohaushaltsgerät vorgesehen.

Die Trommel weist eine Außenwand auf, an der mindestens ein begrenzter Erfassungsbereich aus thermochromem Material oder mit thermochromem Material vorgesehen ist. Dieser Erfassungsbereich ist vorteilhaft zumindest zur Seite hin begrenzt, so dass er als Streifen ausgebildet sein kann. Besonders vorteilhaft ist er allseitig begrenzt, so dass er die Form eines Flecken aufweisen kann, insbesondere als einfache geometrische Form wie Rechteck bzw. Quadrat, möglicherweise auch als Kreis. Dieses thermochrome Material weist eine Umschlagstemperatur auf, die im Bereich einer zu erwartenden und zu bestimmenden Temperatur der umlaufenden Trommel liegt. Im Prinzip beruht die Erfindung wesentlich darauf, dass durch einen temperaturabhängigen Umschlag der Farbe oder der Oberflächeneigenschaften des thermochromen Materials die Temperatur bestimmt werden kann. Ein solcher Umschlag ist für thermochrome Materialien ja allgemein bekannt. Somit kann möglicherweise zwar nicht eine exakte Messung der Temperatur vorgenommen werden, aber zumindest ein Bestimmen, ob die Temperatur der umlaufenden Trommel oberhalb oder unterhalb eines bestimmten Werts liegt. So kann insbesondere eine Umschlagstemperatur nahe der oder genau an der Temperatur gewählt werden, die als Maximaltemperatur oder Grenztemperatur für die umlaufende Trommel angesehen wird. Ein Überschreiten kann dann erfasst werden. Wie viel die Temperatur dann darüber liegen würde oder vor allem wie viel sie darunterliegen würde, muss bei der Erfindung nicht zwingend erfasst werden können.

Es sind optische Erfassungsmittel vorgesehen, die benachbart zu der umlaufenden Trommel angeordnet sind. Vorteilhaft sind die optischen Erfassungsmittel nahe dem Erfassungsbereich oder nahe einer Umlaufbahn des Erfassungsbereichs angeordnet, vorteilhaft mit einem Abstand von weniger als 10 cm oder sogar weniger als 3 cm. Besonders vorteilhaft sind sie in radialer Richtung der umlaufenden Trommel direkt über der Umlaufbahn des Erfassungsbereichs angeordnet. Diese optischen Erfassungsmittel sind dazu ausgebildet, den Umschlag der Farbe oder der Oberflächeneigenschaften des thermochromen Materials zu erfassen, wenn dessen Umschlagstemperatur überschritten wird oder unterschritten wird. Eine mögliche Hysterese bzgl. der Temperatur bei diesem Umschlag ist grundsätzlich bekannt und spielt dabei keine Rolle bzw. stört dabei nicht.

Das Verfahren führt als ersten Schritt durch, dass die Trommel derart rotiert wird, dass sie umläuft. Im Falle eines Wäschetrockners wird also dessen Trommel angetrieben. Als nächstes wird das thermochrome Material mittels der Erfassungsmittel erfasst, indem der Erfassungsbereich an dem Erfassungsmittel vorbeibewegt wird bzw. zumindest immer wieder während des Umlaufs daran vorbeiläuft. Ein Farbumschlag des thermochromen Materials mittels der Erfassungsmittel wird erfasst, wenn seine Umschlagstemperatur überschritten wird oder unterschritten wird. Dieses Umschlagen erfolgt aufgrund einer Änderung der Temperatur der umlaufenden Trommel zumindest im Bereich des jeweiligen Erfassungsbereichs. Anschließend wird eine Temperatur der umlaufenden Trommel oder zumindest desjenigen Bereichs in der Nähe des Erfassungsbereichs als der Umschlagstemperatur entsprechend bestimmt, abhängig vom Überschreiten oder Unterschreiten. Dies bedeutet, dass die Temperatur der umlaufenden Trommel zumindest in dem Bereich des Erfassungsbereichs als unterhalb der Umschlagstemperatur bestimmt wird, wenn das thermochrome Material einen Umschlag seiner Farbe bzw. Oberflächeneigenschaften mit Unterschreiten der Umschlagstemperatur durchführt und dieser festgestellt wird. Andernfalls wird die Temperatur der umlaufenden Trommel als oberhalb der Umschlagstemperatur bestimmt, wenn das thermochrome Material bei Überschreiten der Umschlagstemperatur von unten nach oben seine Farbe bzw. seine Oberflächeneigenschaften entsprechend ändert.

Damit ist eine Bestimmung der Temperatur der umlaufenden Trommel zumindest in der Nähe der Erfassungsmittel möglich dergestalt, dass sie als unterhalb der Umschlagstemperatur oder als oberhalb der Umschlagstemperatur eingestuft wird. Für eine vorteilhafte eingangs genannte Überwachung eines Einhaltens einer maximalen Grenztemperatur ist dies vollkommen ausreichend. Durch das nachfolgend noch näher erläuterte Vorsehen von mehreren Erfassungsbereichen mit jeweils thermochromem Material in unterschiedlichen Umschlagstemperaturen kann auch eine genauere Bestimmung in mehreren Temperaturbereichen erfolgen.

Das thermochrome Material kann vorteilhaft als thermochrome Farbe auf die Erfassungsbereiche bzw. auf die Außenwand der umlaufenden Trommel aufgebracht werden. Dies kann durch Siebdruck odgl. erfolgen. Alternativ können Bänder bzw. Klebebänder mit solchem thermochromem Material versehen werden und dann leicht an der Außenseite aufgebracht bzw. aufgeklebt werden. Derartige thermochrome Materialien bzw. thermochrome Farben sind beispielsweise aus der DE 10 2005 025 896 A1, der DE 10 2005 031 392 A1 und der EP 1 888 004 B1 bekannt. Ein Hersteller ist die Firma TMC Ltd. aus Großbritannien mit einem ChromaZone-Pigment.

In einer vorteilhaften Ausgestaltung der Erfindung erfolgt das Erfassen eines Umschlags der Farbe oder der Oberflächeneigenschaften des thermochromen Materials durch Reflexion bzw. durch Ändern von Reflexionseigenschaften. Hierfür besonders gut ausgebildete Erfassungsmittel können eine Reflex-Lichtschranke aufweisen oder sein mit einer Lichtquelle und mit einem Lichtempfänger. Lichtquelle und Lichtempfänger sind derart ausgebildet und angeordnet, dass von der Lichtquelle ausgestrahltes Licht zumindest zeitweise durch das thermochrome Material in einem seiner beiden Zustände unterhalb oder oberhalb der Umschlagstemperatur reflektiert wird hin zum Lichtempfänger, der dies auf bekannte Art und Weise erfassen kann. Im anderen Zustand ist das reflektierte Licht deutlich stärker oder deutlich schwächer.

In der Regel verliert thermochromes Material seine Farbe bei Überschreiten einer Umschlagstemperatur. Durch eine geeignete Wahl der Farbe eines Untergrunds für das thermochrome Material können damit die Reflexionseigenschaften stark beeinflusst werden, so dass beispielsweise ein Untergrund weiß ist bzw. relativ gut reflektierend ist, das thermochrome Material dagegen schwarz oder dunkel ist und somit nicht reflektiert oder nur relativ schlecht reflektierend ist. Bei Überschreiten der Umschlagstemperatur wird das thermochrome Material dann weitgehend transparent bzw. verliert seine Farbe, so dass die weiße Farbe des darunterliegenden Untergrunds zu Tage tritt. Während die vorher schwarze oder dunkle Farbe des thermochromen Materials nur sehr wenig oder gar kein Licht von der Lichtquelle an den Lichtempfänger reflektiert, reflektiert der weiße Untergrund unterhalb des thermochromen Materials, das dann weitgehend transparent geworden ist, einen großen Teil des ausgesendeten Lichts. Dieser Unterschied kann von dem Lichtempfänger auf bekannte Art und Weise erkannt und ausgewertet werden, wie dies für Reflex-Lichtschranken bekannt und üblich ist.

Grundsätzlich kann auch für die Ausgestaltung als Reflex-Lichtschranke vorgesehen sein, dass das thermochrome Material bessere Reflexionseigenschaften aufweist als ein Untergrund, auf den es aufgebracht ist. Dann ändern sich die Reflexionseigenschaften genau umgekehrt wie zuvor beschrieben, was aber in der Realisierung auch kein Problem darstellt. Eine deutliche Änderung bei der Stärke des reflektierten Lichts lässt sich auch so feststellen.

Grundsätzlich können die Erfassungsmittel auch anders ausgebildet sein, beispielsweise als Farbsensor, der tatsächlich die Farbe des Erfassungsbereichs bzw. des thermochromen Materials erfasst. Auch dadurch ist das Erkennen einer Änderung dieser Farbe möglich.

In vorteilhafter Ausgestaltung der Erfindung sind entlang der Umlaufbahn des Erfassungsbereichs an der umlaufenden Trommel mehrere Erfassungsbereiche an der Außenwand der Trommel angeordnet bzw. vorgesehen. So kann nicht nur sozusagen zeitlich häufiger eine Temperatur bestimmt werden, sondern auch besser verteilt, um entlang mehrerer, vorteilhaft aller, Umfangsbereiche der Trommel eine Temperaturbestimmung zu ermöglichen. Die Erfassungsbereiche weisen vorteilhaft gleichen Abstand zueinander auf, so dass eine regelmäßige Temperaturbestimmung möglich ist. Des Weiteren ist dadurch noch eine zusätzliche Möglichkeit eröffnet, die nachfolgend noch näher erläutert wird, dass damit nämlich auch eine Umlaufgeschwindigkeit der Trommel bestimmt werden kann, zumindest dann, wenn das thermochrome Material oberhalb oder unterhalb seiner Umschlagstemperatur ist und im Vergleich zur sonstigen Oberfläche der Außenseite der umlaufenden Trommel durch die Erfassungsmittel erfassbar ist. Dann kann eine solche Bestimmung der Umlaufgeschwindigkeit bei bekanntem Umfang der umlaufenden Trommel erfolgen aus der zeitlichen Abfolge der Signale an den Erfassungsmitteln, wenn die einzelnen Erfassungsbereiche unter ihnen vorbeilaufen.

In einer Ausgestaltung der Erfindung weisen die mehreren Erfassungsbereiche unterschiedliche thermochrome Materialien auf, von denen jedes eine unterschiedliche Umschlagstemperatur aufweist. Ein Unterschied der Umschlagstemperaturen dieser unterschiedlichen thermochromen Materialien kann maximal 10°C betragen, vorzugsweise maximal 5°C oder sogar nur maximal 3°C. Dadurch ist sozusagen eine Genauigkeit der Temperaturerfassung bestimmbar auf mindestens 10°C genau oder mindestens 5°C bzw. 3°C genau. Je drei oder je vier Erfassungsbereiche können thermochromes Material mit derselben Umschlagstemperatur aufweisen. Diese Erfassungsbereiche, die jeweils dieselbe Umschlagstemperatur aufweisen bzw. aus demselben thermochromen Material bestehen, sind besonders vorteilhaft gleich verteilt entlang der Umlaufbahn. Des Weiteren sind sie gleich groß. Entweder können alle Erfassungsbereiche unabhängig von der Art ihres thermochromen Materials gleiche Länge in Umlaufrichtung aufweisen. Wenn die Umlaufgeschwindigkeit der rotierenden Trommel bekannt ist, was beispielsweise bei Wäschetrocknern der Fall ist, da diese üblicherweise immer mit derselben Umlaufgeschwindigkeit rotieren, üblicherweise mit 40 bis 50 Umdrehungen pro Minute, kann mittels der Erfassungsmittel aufgrund der zeitlichen Wechsel der Reflexionseigenschaften die Umlaufgeschwindigkeit auf bekannte Art und Weise bestimmt werden. Dies kann dann ähnlich erfolgen wie bei Inkrementalgebern mit Streifenmuster.

In die Abfolge der Erfassungsbereiche können charakteristische Abschnitte eingearbeitet sein, die unabhängig von einer Temperatur sind und mittels der Erfassungsmittel erfasst werden können. Dadurch kann beispielsweise eine Reihenfolge der Erfassungsbereiche mit unterschiedlichen Umschlagstemperaturen bestimmt werden, was von den Erfassungsmitteln erfasst werden kann. Wenn dann einzelne Erfassungsbereiche von den Erfassungsmitteln sozusagen nicht mehr erfasst werden können aufgrund eines Durchlaufens der Umschlagstemperatur mit erfolgtem Umschlag, kann so eine Temperatur bestimmt werden. Diese charakteristischen Abschnitte können beispielsweise eine bestimmte Länge aufweisen, die von der Länge der Erfassungsbereiche abweicht, oder bestimmte charakteristische Abfolgen eines Streifenmusters in einem kurzen Bereich. Des Weiteren ist es möglich, dass entlang der Umlaufbahn mit den mehreren unterschiedlichen Erfassungsbereichen mehrere Markierungen als vorgenannte charakteristische Abschnitte aufgebracht werden mit einer Farbe oder einer Oberfläche, die temperaturunabhängig sind, zumindest in dem hierfür den regulären Betrieb interessierenden Temperaturbereich. Auch diese Markierungen können von den Erfassungsmitteln erfasst werden, also ihr Vorhandensein. Ihre Länge sollte sich vorteilhaft von derjenigen der Erfassungsbereiche unterscheiden. Diese Markierungen sollten untereinander jeweils möglichst gleich bzw. identisch ausgebildet sein. Da die Erfassungsmittel sie von den Erfassungsbereichen unterscheiden können, kann mit ihnen auch eine Umlaufgeschwindigkeit der umlaufenden Trommel genau bestimmt werden. Dies ist dann ein weiterer Vorteil, der mit der Erfindung erreicht werden kann, weil damit nicht nur eine aktuelle Geschwindigkeitsbestimmung möglich ist. Auch bei beispielsweise einem Wäschetrockner mit fest vorgegebener Umlaufgeschwindigkeit könnte hier ein mechanisches Problem auftreten, so dass eine Trommel viel langsamer oder gar nicht mehr rotiert. Möglicherweise kann dann ein Überhitzen des beheizten Bereichs stattfinden, was eben auch vermieden werden sollte, unabhängig von einer Temperaturbestimmung.

In einer anderen Ausgestaltung der Erfindung sind entlang einer zweiten separaten Umlaufbahn, die parallel zu der Umlaufbahn der Erfassungsbereiche aus thermochromem Material oder mit thermochromem Material verläuft, mehrere Markierungen aufgebracht mit einer Farbe oder einer Oberfläche, die temperaturunabhängig sind und die von den Erfassungsmitteln erfasst werden können. Auch diese Markierungen sind, wie zuvor erläutert, vorteilhaft sämtlich gleich lang. Damit kann mit ihnen erkennbar auf zuvor beschriebene Art und Weise mit hierfür vorgesehenen Erfassungsmitteln eine Umlaufgeschwindigkeit der umlaufenden Trommel bestimmt werden auf einfache Art und Weise. Wenn in diesem Bereich keinerlei Markierungen mit Erfassungsbereichen aus thermochromem Material bzw. mit thermochromem Material vorgesehen sind, dann kann eine Erfassung der Umlaufgeschwindigkeit besonders einfach und sicher erfolgen. Somit ist eine erste Umlaufbahn vorgesehen zur Bestimmung der Umlaufgeschwindigkeit, und mindestens eine andere zweite Umlaufbahn für die Bestimmung der Temperatur. Diese beiden Funktionen sind bei dieser Ausgestaltung der Erfindung also getrennt, während sie bei der zuvor beschriebenen Ausgestaltung in einer Umlaufbahn gemeinsam vorgesehen sind.

Wie zuvor erläutert worden ist, wird die umlaufende Trommel vorteilhaft beheizt. Dazu ist in vorteilhafter Ausgestaltung der Erfindung vorgesehen, dass entsprechende Heizmittel nicht an der umlaufenden Trommel selbst angeordnet sind wegen einer möglicherweise schwierigen und aufwändigen elektrischen Kontaktierung daran wegen dessen Bewegung. Es wird als bevorzugt angesehen, wenn Heizmittel für die umlaufende Trommel die Außenseite berührungslos bzw. über einen gewissen Abstand hinweg beheizen, wozu sich vor allem Strahlungsheizkörper oder Induktionsheizspulen eignen. Diese können auch mit einem gewissen Abstand zu der Trommel bzw. ihrer Außenseite vorgesehen sein, beispielsweise 0,5 cm bis 3 cm oder sogar bis 5 cm. So ist eine Anordnung einfacher, da eine erforderliche Genauigkeit nicht so hoch sein muss. Somit ist es auch möglich, die Heizmittel starr und ortsfest anzuordnen. Gerade für Strahlungsheizkörper, die selbst hohe Temperaturen von mehreren 100 °C bis knapp 1.100 °C zumindest an den Heizleitern entwickeln, ist eine solche starre Anordnung von Vorteil, wodurch sie dann auch thermisch gut gedämmt werden können. Strahlungsheizkörper können direkt auf eine Außenseite der umlaufenden Trommel strahlen, um dieses zu erwärmen. Dazu kann die Oberfläche ggf. speziell bearbeitet sein, insbesondere aufgeraut sein odgl., damit möglichst wenig Strahlungswärme reflektiert wird und möglichst viel Strahlungswärme in die Trommel eingekoppelt wird. Eine entsprechende Beschichtung oder Farbgebung, insbesondere dunkel oder möglichst schwarz für maximal hohe Absorption, kann auch vorgesehen sein. Eine Beheizung sollte dann über eine möglichst große Breite der umlaufenden Trommel quer zur Umlaufbahn erfolgen, um so während des Umlaufens dessen möglichst großflächige Beheizung zu ermöglichen.

Ähnliche Grundsätze können auch für das Beheizen mit einer Induktionsheizspule gelten, wobei hier zur möglichst guten Einkopplung der Wärmeenergie ein induktiv beheizbares Material für die Trommel verwendet werden sollte. Alternativ kann solches induktiv gut beheizbares Material an der Außenseite der Trommel angeordnet werden, welches dann eben beheizt wird und die Wärme nach innen an die umlaufende Trommel selbst weitergibt.

Bevorzugt sind die Heizmittel und die Erfassungsbereiche derart ausgebildet, dass sie sich nicht stören bzw. dass in Draufsicht senkrecht auf eine Oberfläche der umlaufenden Trommel die Heizmittel neben den Erfassungsbereichen angeordnet sind, diese also sozusagen sichtbar sind. Dies gilt auch für den Fall, dass sich die Trommel dreht. So kann eine Temperaturverfälschung reduziert oder sogar ganz vermieden werden. Vorteilhaft ist also vorgesehen, dass eine Umlaufbahn der Erfassungsbereiche, möglicherweise auch eine direkt daneben verlaufende Umlaufbahn von vorgenannten Markierungen oder charakteristischen Abschnitten, in einem Mittelbereich der Breite der umlaufenden Trommel angeordnet ist. Heizmittel sind dann links und rechts daneben angeordnet. Entlang der Umlaufbahn können zwar mehrere Heizmittel vorgesehen sein, üblicherweise wird es bei entsprechender Auslegung der Leistung der Heizmittel aber auch reichen, dass entlang der Umlaufbahn eines Bereichs der Außenseite der Trommel nur ein einziges Heizmittel angeordnet ist. Bei einer vorgenannten relativ geringen Umlaufgeschwindigkeit reicht dies, vor allem wenn man berücksichtigt, dass eine Temperatur der umlaufenden Trommel eines Wäschetrockners 100°C nicht überschreiten sollte, vorteilhaft zwischen 50°C und maximal 80°C liegt.

Es ist vorteilhaft vorgesehen, dass eine Erwärmung der Erfassungsbereiche nur durch Quer-Wärmeleitung der Außenseite der umlaufenden Trommel erfolgt und nicht durch die Heizmittel direkt. So kann eine Temperaturerfassung verbessert werden.

Bevorzugt sind in einem Wäschetrockner mit Trommel, die eine horizontale Drehachse aufwiesen kann, aber nicht zwingend aufweisen muss, die Erfassungsmittel und/oder die Heizmittel im oberen Bereich angeordnet. Besonders vorteilhaft sind sie ganz oben angeordnet, dadurch können auch Probleme mit einer Entstehung von Wärme vermieden werden, weil hier in keinem Fall Wäsche liegen bleiben kann.

Des Weiteren ist vorteilhaft vorgesehen, dass bei einem Trockenvorgang die Heizmittel abgeschaltet werden, wenn durch die Erfassungsmittel festgestellt worden ist, dass sich die Trommel nicht mehr so schnell wie vorgesehen oder sogar gar nicht mehr dreht, also stillsteht, da die Erfassungsmittel eine andere oder gar keine Bewegung mehr registrieren. Ansonsten könnte nämlich ein Überhitzen der Außenseite der umlaufenden Trommel nahe den Heizmitteln bzw. direkt unter den Heizmitteln erfolgen, was auf alle Fälle vermieden werden sollte.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Darstellung eines erfindungsgemäßen Wäschetrockners mit umlaufender Trommel,
- Fig. 2: eine Draufsicht auf die Trommel des Wäschetrockners aus Fig. 1 mit verschiedenen Erfassungsbereichen, zwei Strahlungsheizern und einer Reflex-Lichtschranke und
- Fig. 3: eine Darstellung eines abgerollten Messstreifens aus Fig. 2 mit Markierungen und temperaturveränderlichen thermochromen Farben bei einer Temperatur unterhalb einer Umschlagstemperatur und darüber.

### Detaillierte Beschreibung der Ausführungsbeispiele

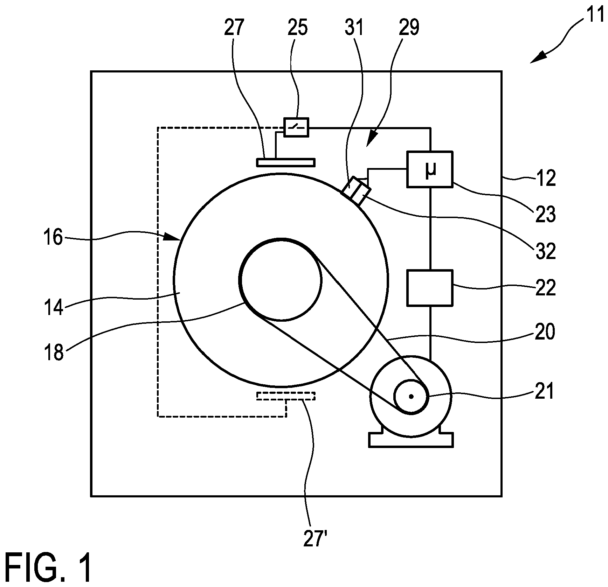

In der Fig. 1 ist ein erfindungsgemäßer Wäschetrockner 11 stark vereinfacht dargestellt, mit dem auch das Verfahren gemäß der Erfindung durchgeführt werden kann. Der Wäschetrockner 11 ist weitgehend wie im Stand der Technik bekannt aufgebaut mit einem Gehäuse 12 und einer Trommel 14 samt Außenseite 16. Die Trommel 14 weist einen Vorsprung 18 an der hinteren Seite auf, um mittels eines Antriebsriemens 20 von einem Antriebsmotor 21 angetrieben bzw. gedreht zu werden. Der Antriebsriemen 20 kann aber auch ohne Vorsprung direkt auf der Trommel 14 laufen und diese eben teilweise umschlingen. Üblicherweise ist nur eine einzige fixe Drehzahl für die Trommel 14 vorgegeben, vorteilhaft mit den vorgenannten 40 bis 50 Umin.

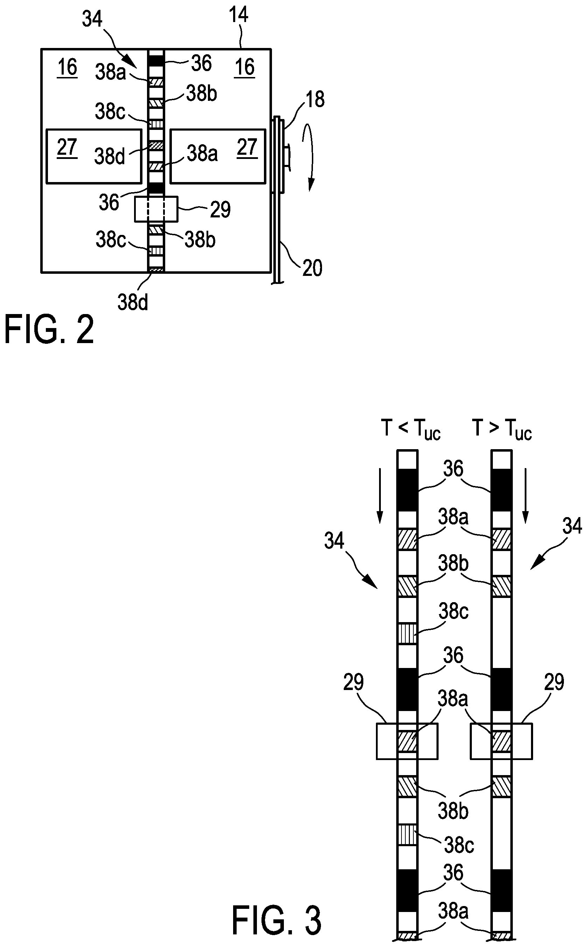

Der Wäschetrockner 11 weist eine Leistungsversorgung 22 für den Antriebsmotor 21 auf, die von einer Steuerung 23 für den gesamten Wäschetrockner 11 gesteuert wird. Die Steuerung 23 steuert darüber hinaus auch einen Leistungsschalter 25 an, mit dem ein oberhalb der Trommel 14 angeordneter Strahlungsheizkörper 27 betrieben werden kann. Vorteilhaft wird dieser taktend oder kontinuierlich betrieben, insbesondere indem er direkt an Netzspannung angeschlossen wird. Derartige Strahlungsheizkörper sind von Elektrokochfeldern bekannt. Sie weisen eine bestimmte Fläche auf, siehe auch die Fig. 2, auf der Heizleiter verlegt sind. Diese glühen im Betrieb und erzeugen Strahlungswärme, die dann auf die Außenseite 16 der Trommel 14 gerichtet ist, um diese zu erwärmen. Unterhalb der Trommel 14 ist ein optionaler weiterer Strahlungsheizkörper 27' gestrichelt dargestellt, mit dem die Trommel 14 noch besser erwärmt werden kann. Es ist leicht vorstellbar, wie anstelle des Strahlungsheizkörpers 27 oder 27' eine flächige Induktionsheizspule vorgesehen sein kann. Für sie müsste dann die Trommel 14 bzw. ihre Außenseite 16 so ausgebildet sein, dass sie induktiv erwärmt werden können.

Des Weiteren steuert die Steuerung 23 eine Reflex-Lichtschranke 29 an bzw. wertet diese aus, die rechts oberhalb der Trommel 14 angeordnet ist. Die Reflex-Lichtschranke 29 ist im Wesentlichen ausgebildet wie im Stand der Technik bekannt mit einem Sender 31 und einem Empfänger 32, vorteilhaft ausgebildet als LED und als Fototransistor.

Im Vergleich zu konventionellen Wäschetrocknern weist der erfindungsgemäße Wäschetrockner 11 eben den Leistungsschalter 25, die Strahlungsheizkörper 27 und die Reflex-Lichtschranke 29 auf.

Zusätzlich ist an der Außenseite 16 der Trommel 14 ein Messstreifen 34 vorgesehen, wie in der Fig. 2 dargestellt ist. Der Messstreifen 34 verläuft in der Breite der Trommel 14 gesehen in etwa in der Mitte. Zwei Strahlungsheizkörper 27 sind links und rechts davon vorgesehen, vorteilhaft entsprechend Fig. 1 oberhalb der Trommel 14. Durch den freigelassenen mittleren Bereich heizen sie nicht direkt auf den Messstreifen 34, um, wie eingangs erläutert worden ist, die Temperaturbestimmung möglichst wenig zu beeinflussen oder zu verfälschen.

Der Messstreifen 34 verläuft entlang der Umlaufbahn um die gesamte Außenseite der Trommel 14 als eine Art Ring. Entlang des Messstreifens 34 sind Markierungen 36 vorgesehen, hier ausgebildet als rechteckige schwarze Flächen. Es sind insgesamt vier Markierungen 36, von denen zwei sichtbar sind. Sie können durch Farbe oder durch einen entsprechenden eingangs genannten Aufkleber gebildet werden. Im normalen Temperaturbereich beim Betrieb des Wäschetrockners 11 verändern die Markierungen 36 ihre Farbe nicht.

In Umlaufrichtung entlang des Messstreifens 34 sind der Markierung 36 folgend fünf verschiedene Rechtecke angeordnet, die jeweils durch verschiedene thermochrome Farben, im Folgenden TC-Farben genannt, gebildet werden, also als TC-Farbe 38a, 38b, 38c, 38d und 38e. Diese TC-Farben 38a bis 38e unterscheiden sich durch ihre jeweilige Umschlagstemperatur. Ein Abstand zwischen diesen Umschlagstemperaturen kann im eingangs genannten Bereich liegen, vorteilhaft etwa 5°C oder 10°C betragen. Die TC-Farbe 38a kann eine Umschlagstemperatur von 80°C aufweisen als maximale erlaubte Temperatur für die Trommel 14. Die TC-Farbe 38b kann eine Umschlagstemperatur von 75°C aufweisen, also etwas unterhalb davon liegen. Die TC-Farbe 38c kann eine Umschlagstemperatur von 60°C aufweisen. Die TC-Farbe 38d kann eine Umschlagstemperatur von 50°C aufweisen, und die TC-Farbe 38e eine Umschlagstemperatur von 40°C. Diese niedrigste Umschlagstemperatur von 40°C der TC-Farbe 38e dient als sozusagen unterste Temperaturgrenze. Gerade bei einer solchen niedrigen Temperatur ist die Beheizung der Trommel besonders vorteilhaft, da sie am Anfang schneller ist als die Beheizung mit eingeblasener Luft, die ohnehin vorgesehen ist. Unter den genannten 40°C kann die Trommel 14 mit maximaler Leistung geheizt werden, während bei zunehmender Temperatur die Leistung zurückgenommen werden muss bzw. kann um ausreichend schnell auf einen eingangs genannten Trommelstillstand zu reagieren. Dieser zeigt sich durch ein Ausbleiben des Signalwechsels.

Selbst wenn man berücksichtigt, dass die einzelnen TC-Farben einen vorgenannten Hysterese-Effekt aufweisen bei Durchschreiten der Umschlagstemperaturen von unten nach oben oder von oben nach unten, kann mit dieser Temperaturaufteilung eine gute Bestimmung der Temperatur der Trommel 14 bzw. der Außenseite 16 erfolgen. Da die Trommel 14 bei einem Wäschetrockner 11 üblicherweise aus Edelstahl besteht, der relativ dünn ist, ist dennoch eine Wärme-Querleitung angesichts der großen Fläche der Strahlungsheizkörper 27 so gut, dass die TC-Farben 38a bis 38e am Messstreifen 34 auch wirklich relativ genau die Temperatur der Wandung der Trommel 14 aufweisen. Mit der genannten Aufteilung der Temperaturen können verschiedene für einen Betrieb eines Wäschetrockners praxistaugliche Temperaturen eingestellt werden. Die genannte Hysterese von etwa 2°C bis etwa 3°C kann im mittleren Bereich zwar zu einer gewissen Unbestimmtheit führen, hier ist diese aber nicht schädlich. Am oberen Temperaturbereich kann spätestens dann, wenn die TC-Farbe 38a unsichtbar wird, was mittels der Reflex-Lichtschranke 29 erfasst werden kann, die Leistung an den Strahlungsheizkörpern 27 reduziert werden oder sie werden ganz abgeschaltet. Dann wird die Temperatur wieder sinken, und selbst wenn bei einer Temperatur von etwa 80°C aufgrund der Hysterese die TC-Farbe 38a noch nicht wieder sichtbar wird, so wird sie doch bei etwa 77°C oder 78°C wieder sichtbar. Dies ist aber weniger wichtig als das Erkennen des Überschreitens der 80°C in Richtung nach oben.

Die TC-Farbe 38b mit der Umschlagstemperatur von 75°C dient vor allem dazu, um bei Wäsche, die mit sehr hoher Temperatur getrocknet werden kann, beispielsweise Baumwolle, eine Art Regelungspunkt zu haben unterhalb der als Grenze anzusehenden 80°C der TC-Farbe 38a. Bei dieser wird ja abgeschaltet.

In der Fig. 3 sind zwei Messstreifen 34 dargestellt, die in leichter Abwandlung desjenigen aus Fig. 2 unterhalb der etwas längeren Markierungen 36 drei TC-Farben 38a bis 38c aufweisen. Diese TC-Farben 38a bis 38c weisen die Umschlagstemperaturen auf, die zur Fig. 2 genannt worden sind. Beim linken Messstreifen 34 ist eine Temperatur noch unterhalb einer Umschlagstemperatur T_{UC} der TC-Farbe 38c, die bei 60°C liegen kann. Somit ist hier auch die TC-Farbe 38c sichtbar. Die Reflex-Lichtschranke 29 kann anhand der deutlich längeren Markierungen 36 die Umlaufgeschwindigkeit der Trommel 14 erfassen und vor allem abprüfen, ob die Umlaufgeschwindigkeit noch korrekt ist. Durch die halb so große Länge der TC-Farben 38a bis 38c können diese leicht von der Markierung 36 unterschieden werden.

Nachdem die Trommel 14 die Umschlagstemperatur T_{UC} der TC-Farbe 38c überschritten hat, also wärmer ist als 60°C, wird die TC-Farbe 38c transparent bzw. sozusagen unsichtbar. Deswegen ist sie am rechten Messstreifen 34 nicht mehr zu sehen. Dies erkennt die Reflex-Lichtschranke 29, da bei Bewegung des Messstreifens 34 samt seinen Markierungen und TC-Farben 38 nach unten nach einer Markierung 36 eine Lücke kommt, und erst nach zwei weiteren TC-Farben 38b und 38a die nächste Markierung 36 erfasst wird. Somit wird die Temperatur der Trommel 14 als mindestens 60°C bestimmt, aber noch unter 75°C.

Es ist nämlich leicht vorstellbar, dass in dem Fall, dass die Trommel 14 auch eine Temperatur über 75°C erreichen oder sogar überschreiten würde, die TC-Farbe 38b durchsichtig wird, was von der Reflex-Lichtschranke 29 wieder erkannt werden kann. Würde die Temperatur dann noch weiter ansteigen und 80°C überschreiten, so würde auch die TC-Farbe 38a durchsichtig werden, die Reflex-Lichtschranke 29 würde dann nur noch die länglichen Markierungen 36 erkennen. Aufgrund der als zu hoch bestimmten Temperatur würde der Strahlungsheizkörper 27 abgeschaltet werden oder zumindest in seiner Leistung deutlich reduziert werden, wobei ein Abschalten aus Sicherheitsgründen zu bevorzugen ist.

Des Weiteren kann vorgesehen sein, dass in dem Fall, dass der Antriebsmotor 21 ausfallen sollte und sich die Trommel 14 nicht mehr dreht bei betriebenem Strahlungsheizkörper 27, die Temperatur in diesem Bereich der Trommel 14 stark ansteigt. Hierin liegt auch ein Vorteil der Anordnung der Strahlungsheizkörper 27 ganz oben an der Trommel 14, da hier eigentlich keine Wäsche anliegen kann, die dann direkt beschädigt werden kann. Durch die große Nähe der Anordnung der Reflex-Lichtschranke 29 in der Nähe würde dann für den Fall, dass unterhalb der Reflex-Lichtschranke 29 eine TC-Farbe 38 ist, diese aufgrund der Erhöhung transparent wird, was die Reflex-Lichtschranke 29 erfassen kann. Wenn dann für eine gewisse Zeit, die vorgegeben werden kann, beispielsweise 2 sec, die Reflex-Lichtschranke kein Passieren einer weiteren TC-Farbe 38 oder zumindest einer der längeren Markierungen 36 erfasst, wird dies als ein Fehler beim Antrieb der Trommel 14 gewertet. Der Strahlungsheizkörper 27 wird dann sofort ausgeschaltet, eine entsprechende Fehlermeldung kann ausgegeben werden. Die TC-Farbe 38 muss gar nicht unbedingt transparent werden, da ein Farbwechsel an der Reflex-Lichtschranke so oder so ausbleibt, muss die Trommel 14 entweder stehen oder zu heiß sein. Beides ist gleichermaßen Grund zur Abschaltung der Beheizung.

Anhand der Fig. 3 ist es auch leicht vorstellbar, dass für den Fall, dass eine auf die Breite der Trommel 14 gemäß Fig. 2 gesehen besser verteilte Temperaturerfassung vorgesehen sein soll, zwei oder noch mehr solcher Messstreifen 34 vorgesehen werden können. In ähnlicher Form kann auch vorgesehen sein, dass ein reiner Messstreifen 34 nur mit TC-Farben mit unterschiedlichen Umschlagstemperaturen vorgesehen wird. Relativ nahe daran wird ein weiterer Messstreifen nur mit Markierungen zur Ermittlung der Umlaufgeschwindigkeit der Trommel 14 vorgesehen.

Eigentlich wird nur ein Messstreifen 34 mit TC-Farben 38 benötigt für eine Sicherheitsabschaltung der Beheizung. Sowohl eine zu hohe Temperatur als auch ein Stillstand der Trommel 14 würden den Wechsel ausbleiben lassen und können dann zum Abschalten der Beheizung dienen.

## Patentansprüche

1. Verfahren zur Bestimmung einer Temperatur einer umlaufenden Trommel (14) eines Wäschetrockners (11), wobei die Trommel aufweist:
- eine Außenwand (16),
- an der Außenwand (16) mindestens einen begrenzten Erfassungsbereich (34) aus thermochromem Material (38) oder mit thermochromem Material (38), wobei das thermochrome Material eine Umschlagstemperatur im Bereich einer zu erwartenden und zu bestimmenden Temperatur der umlaufenden Trommel (14) aufweist,
- optische Erfassungsmittel (29), die benachbart zu der umlaufenden Trommel (14) angeordnet sind und die dazu ausgebildet sind, den Farbumschlag des thermochromen Materials (38) bei Über- oder Unterschreiten der Umschlagstemperatur zu erfassen,
mit den Schritten
- Rotieren der Trommel (14) derart, dass sie umläuft,
- Erfassen des thermochromen Materials (38) mittels der Erfassungsmittel (29),
- Erfassen eines Farbumschlags des thermochromen Materials (38) mittels der Erfassungsmittel (29),
- Bestimmen einer Temperatur der umlaufenden Trommel (14) bezüglich der Umschlagstemperatur derart, dass bestimmt wird, ob die Temperatur der Trommel einem der beiden Temperaturbereiche unterhalb der Umschlagstemperatur oder oberhalb der Umschlagstemperatur entspricht.

2. Verfahren nach Anspruch 1, **dadurch gekennzeichnet, dass** das Erfassen eines Farbumschlags des thermochromen Materials (38) durch Reflexion erfolgt, wobei insbesondere hierfür die Erfassungsmittel als Reflex-Lichtschranke (29) ausgebildet sind mit einer Lichtquelle (31) und einem Lichtempfänger (32), die derart ausgebildet und angeordnet sind, dass von der Lichtquelle (31) ausgestrahltes Licht zumindest zeitweise durch das thermochrome Material (38) in einem seiner beiden Zustände reflektiert wird hin zum Lichtempfänger (32).

3. Verfahren nach Anspruch 1 oder 2, **dadurch gekennzeichnet, dass** entlang einer Umlaufbahn des Erfassungsbereichs (34) bei der umlaufenden Trommel (14) mehrere Erfassungsbereiche an der Außenwand (16) der Trommel angeordnet sind, vorzugsweise mit gleichem Abstand zueinander.

4. Verfahren nach Anspruch 3, **dadurch gekennzeichnet, dass** die mehreren Erfassungsbereiche (34) unterschiedliche thermochrome Materialien (38) aufweisen, von denen jedes eine unterschiedliche Umschlagstemperatur aufweist.

5. Verfahren nach Anspruch 3 oder 4, **dadurch gekennzeichnet, dass** je drei oder vier Erfassungsbereiche (34) thermochromes Material (38) mit derselben Umschlagstemperatur aufweisen, wobei insbesondere diese drei oder vier Erfassungsbereiche gleich verteilt sind entlang der Umlaufbahn.

6. Verfahren nach Anspruch 4 oder 5, **dadurch gekennzeichnet, dass** ein Unterschied der Umschlagstemperatur der unterschiedlichen thermochromen Materialien (38) maximal 10°C beträgt, vorzugsweise maximal 5°C.

7. Verfahren nach einem der Ansprüche 3 bis 6, **dadurch gekennzeichnet, dass** entlang der Umlaufbahn mit den Erfassungsbereichen (34) mehrere Markierungen (36) aufgebracht sind mit einer Farbe oder einer Oberfläche, die temperaturunabhängig sind und die von den Erfassungsmitteln (29) erfassbar sind.

8. Verfahren nach Anspruch 7, **dadurch gekennzeichnet, dass** eine Länge der Markierungen (36) entlang der Umlaufbahn unterschiedlich ist von derjenigen der Erfassungsbereiche (34), wobei vorzugsweise sämtliche Markierungen entlang der Umlaufbahn gleich lang sind.

9. Verfahren nach einem der Ansprüche 3 bis 8, **dadurch gekennzeichnet, dass** entlang einer Umlaufbahn, die parallel zu der Umlaufbahn der Erfassungsbereiche (34) aus thermochromem Material (38) oder mit thermochromem Material ist, mehrere Markierungen (36) aufgebracht sind mit einer Farbe oder einer Oberfläche, die von Erfassungsmitteln (29) erfassbar sind.

10. Verfahren nach Anspruch 9, **dadurch gekennzeichnet, dass** entlang der Umlaufbahn mit den Markierungen (36) kein Erfassungsbereich (34) aus thermochromem Material (38) oder mit thermochromem Material vorgesehen ist.

11. Verfahren nach einem der vorhergehenden Ansprüche, **dadurch gekennzeichnet, dass** Heizmittel für die Trommel (14) vorgesehen sind, vorzugsweise zur Beheizung von deren Außenseite (16), insbesondere Strahlungsheizkörper (27) oder Induktionsheizspulen.

12. Verfahren nach Anspruch 11, **dadurch gekennzeichnet, dass** die Heizmittel (27) nicht an der Trommel (14) selbst befestigt sind und somit starr angeordnet sind bzw. nicht umlaufen.

13. Verfahren nach Anspruch 11 oder 12, **dadurch gekennzeichnet, dass** die Heizmittel (27) links und rechts neben der Umlaufbahn der Erfassungsbereiche (34), vorzugsweise auch neben einer weiteren Umlaufbahn mit den Markierungen (36), angeordnet sind, insbesondere derart, dass ihre Heizwirkung nicht direkt auf die Umlaufbahnen wirkt.

14. Wäschetrockner (11), der zur Durchführung eines Verfahrens nach einem der vorhergehenden Ansprüche ausgebildet ist zur Bestimmung einer Temperatur der umlaufenden Trommel (14), wobei der Wäschetrockner aufweist:
- die rotierende Trommel (14),
- eine Außenwand (16) an der Trommel,
- an der Außenwand (16) mindestens einen begrenzten Erfassungsbereich (34) aus thermochromem Material (38) oder mit thermochromem Material, wobei das thermochrome Material eine Umschlagstemperatur im Bereich einer zu erwartenden und zu bestimmenden Temperatur der rotierenden Trommel (14) aufweist,
- optische Erfassungsmittel (29), die benachbart zu der rotierenden Trommel (14) angeordnet sind, wobei die optischen Erfassungsmittel dazu ausgebildet sind, einen Farbumschlag des thermochromen Materials (38) bei Über- oder Unterschreiten der Umschlagstemperatur zu erfassen.

## Claims

1. Method for determining a temperature of a revolving drum (14) of a laundry drier (11), the drum having:
- an outer wall (16),
- on the outer wall (16) at least one delimited detection region (34) composed of thermochromic material (38) or comprising thermochromic material (38), wherein the thermochromic material has a transition temperature in the range of a temperature of the revolving drum (14) that is to be expected and to be determined,
- optical detection means (29) arranged adjacent to the revolving drum (14) and configured to detect the color transition of the thermochromic material (38) in the event of the transition temperature being exceeded or undershot,
comprising the steps of
- rotating the drum (14) in such a way that it revolves,
- detecting the thermochromic material (38) by means of the detection means (29),
- detecting a color transition of the thermochromic material (38) by means of the detection means (29),
- determining a temperature of the revolving drum (14) as corresponding to the transition temperature in such a way that the temperature of the drum is determined as corresponding to one of the two temperature ranges below the transition temperature or above the transition temperature.

2. Method according to claim 1, **characterized in that** detecting a color transition of the thermochromic material (38) is carried out by means of reflection, wherein for this purpose, in particular, the detection means are configured as a reflected light barrier (29) comprising a light source (31) and a light receiver (32), which are configured and arranged in such a way that light emitted by the light source (31) is reflected toward the light receiver (32) at least at times by the thermochromic material (38) in one of the two states thereof.

3. Method according to claim 1 or 2, **characterized in that** along a path of revolution of the detection region (34) at the revolving drum (14) a plurality of detection regions are arranged on the outer wall (16) of the drum, preferably at an identical distance from one another.

4. Method according to claim 3, **characterized in that** the plurality of detection regions (34) comprise different thermochromic materials (38), each of which has a different transition temperature.

5. Method according to claim 3 or 4, **characterized in that** three or four detection regions (34) respectively comprise thermochromic material (38) having the same transition temperature, wherein in particular said three or four detection regions are equally distributed along the path of revolution.

6. Method according to claim 4 or 5, **characterized in that** a difference in the transition temperature of the different thermochromic materials (38) is a maximum of 10°C, preferably a maximum of 5°C.

7. Method according to any of claims 3 to 6, **characterized in that** along the path of revolution with the detection regions (34) a plurality of markings (36) are applied with a color or a surface, which are temperature-independent and which are detectable by the detection means (29).

8. Method according to claim 7, **characterized in that** a length of the markings (36) along the path of revolution is different from that of the detection regions (34), wherein preferably all of the markings along the path of revolution are of identical length.

9. Method according to any of claims 3 to 8, **characterized in that** along a path of revolution that is parallel to the path of revolution of the detection regions (34) composed of thermochromic material (38) or comprising thermochromic material, a plurality of markings (36) are applied with a color or a surface, which are detectable by detection means (29).

10. Method according to claim 9, **characterized in that** no detection region (34) composed of thermochromic material (38) or comprising thermochromic material is provided along the path of revolution with the markings (36).

11. Method according to any of the preceding claims, **characterized in that** heating means for the drum (14) are provided, preferably for heating the exterior (16) thereof, in particular radiant heating elements (27) or induction heating coils.

12. Method according to claim 11, **characterized in that** the heating means (27) are not secured to the drum (14) itself and, consequently, are arranged rigidly or do not revolve.

13. Method according to claim 11 or 12, **characterized in that** the heating means (27) are disposed on the left and right alongside the path of revolution of the detection regions (34), preferably also alongside a further path of revolution with the markings (36), in particular in such a way that their heating effect does not directly affect the paths of revolution.

14. Laundry drier (11) configured for carrying out a method according to any of the preceding claims, for determining a temperature of the revolving drum (14), the laundry drier having:
- a rotating drum (14),
- an outer wall (16) on the drum,
- on the outer wall (16) at least one delimited detection region (34) composed of thermochromic material (38) or comprising thermochromic material, wherein the thermochromic material has a transition temperature in the range of a temperature of the rotating drum (14) that is to be expected and to be determined,
- optical detection means (29) which are arranged adjacent to the rotating drum (14), wherein the optical detection means are configured to detect a color transition of the thermochromic material (38) in the event of the transition temperature being exceeded or undershot.

## Revendications

1. Procédé de détermination d'une température d'un tambour (14) tournant d'un sèche-linge (11), le tambour comprenant :
- une paroi extérieure (16),
- sur la paroi extérieure (16) au moins une zone de détection (34) limitée en matériau thermochromique (38) ou comprenant matériau thermochromique (38), le matériau thermochromique présentant une température de changement dans la plage d'une température à espérer et à déterminer du tambour (14) tournant,
- moyens de détection (29) optiques, disposés adjacents au tambour (14) tournant et configurés pour détecter le changement de couleur du matériau thermochromique (38) en cas de dépassement ou souspassement de la température de changement, comprenant les étapes
- tourner le tambour (14) de telle manière qu'il circule,
- détecter le matériau thermochromique (38) par le biais des moyens de détection (29),
- détecter un changement de couleur du matériau thermochromique (38) par le biais des moyens de détection (29),
- déterminer une température du tambour (14) tournant en termes de la température de changement de manière à déterminer si la température du tambour correspond à l'une des deux plages des température inférieure à la température de changement ou supérieure à la température de changement.

2. Procédé selon la revendication 1, **caractérisé en ce que** la détection d'un changement de couleur du matériau thermochromique (38) s'effectue par réflexion, dans lequel à cet effet en particulier les moyens de détection sont configurés sous forme de barrière lumineuse à réflexion (29) comprenant une source de lumière (31) et un récepteur de lumière (32) qui sont configurées et arrangées de telle manière que lumière émise par la source de lumière (31) soit réfléchie au moins temporairement par le matériau thermochromique (38) dans l'un de ces deux états vers le récepteur de lumière (32).

3. Procédé selon la revendication 1 ou 2, **caractérisé en ce que** le long d'un trajet de circulation de la zone de détection (34) du tambour (14) tournant plusieurs zones de détection sont disposées sur une paroi extérieure (16) du tambour, de préférence à égale distance l'une de l'autre.

4. Procédé selon la revendication 3, **caractérisé en ce que** les plusieurs zones de détection (34) présentent des matériaux thermochromiques (38) différents, chacun desdites matériaux présentant une température de changement différente.

5. Procédé selon la revendication 3 ou 4, **caractérisé en ce que** respectivement trois ou quatre zones de détection (34) présentent matériau thermochromique (38) de la même température de changement, dans lequel en particulier lesdites trois ou quatre zones de détection sont réparties uniformément le long du trajet de circulation.

6. Procédé selon la revendication 4 ou 5, **caractérisé en ce qu'**une différence de la température de changement des matériaux thermochromiques (38) différents est au maximum 10 °C, de préférence au maximum 5 °C.

7. Procédé selon l'une quelconque des revendications 3 à 6, **caractérisé en ce que** le long du trajet de circulation avec les zones de détection (34) plusieurs marquages (36) sont appliqués par une peinture ou une surface, lesdits marquages étant indépendants de la température et détectables par les moyens de détection (29).

8. Procédé selon la revendication 7, **caractérisé en ce qu'**une longueur des marquages (36) le long du trajet de circulation est différente de celle des zones de détection (34), dans lequel de préférence tous les marquages le long du trajet de circulation sont de même longueur.

9. Procédé selon l'une quelconque des revendications 3 à 8, **caractérisé en ce que** le long d'un trajet de circulation s'étendant parallèlement au trajet de circulation des zones de détection (34) en matériau thermochromique (38) ou comprenant matériau thermochromique (38) plusieurs marquages (36) sont appliqués par une peinture ou une surface et sont détectables par des moyens de détection (29).

10. Procédé selon la revendication 9, **caractérisé en ce que** le long du trajet de circulation avec les marquages (36) aucune zone de détection (34) en matériau thermochromique (38) ou comprenant matériau thermochromique n'est prévue.

11. Procédé selon l'une quelconque des revendications précédentes, **caractérisé en ce que** moyens de chauffage pour le tambour (14) sont prévus, de préférence pour chauffer le côté extérieur (16) du tambour, en particulier corps de chauffe rayonnants (27) ou bobines de chauffage par induction.

12. Procédé selon la revendication 11, **caractérisé en ce que** les moyens de chauffage (27) ne sont pas attachés sur le tambour (14) même et par conséquent sont disposés rigidement ou bien ne circulent pas.

13. Procédé selon la revendication 11 ou 12, **caractérisé en ce que** les moyens de chauffage (27) sont disposés à gauche et à droite adjacents au trajet de circulation des zones de détection (34), de préférence aussi adjacents à un autre trajet de circulation avec les marquages (36), en particulier de telle manière que leur effet chauffant n'agit pas directement sur les trajets de circulation.

14. Sèche-linge (11) configuré pour la mise en oeuvre d'un procédé selon l'une quelconque des revendications précédentes de détermination d'une température d'un tambour (14) tournant, le sèche-linge comprenant :
- un tambour (14) tournant,
- une paroi extérieure (16) sur le tambour,
- sur la paroi extérieure (16) au moins une zone de détection (34) limitée en matériau thermochromique (38) ou comprenant matériau thermochromique (38), le matériau thermochromique présentant une température de changement dans la plage d'une température à espérer et à déterminer du tambour (14) tournant,
- moyens de détection (29) optiques, disposés adjacents au tambour (14) tournant, les moyens de détection optiques étant configurés pour détecter un changement de couleur du matériau thermochromique (38) en cas de dépassement ou souspassement de la température de changement.
